# EUROPÄISCHE PATENTSCHRIFT

(11) **EP 2 215 463 B1**
(45) Veröffentlichungstag und Bekanntmachung des Hinweises auf die Patenterteilung: **04.01.2017**
(21) Anmeldenummer: 08854870.6
(22) Anmeldetag: 27.11.2008
(51) Int. Cl.: G01N 27/07, G01N 27/414

(54) **DICHTANORDNUNG EINES SENSORS**
SEALING ARRANGEMENT OF A SENSOR
ENSEMBLE D'ÉTANCHÉITÉ D'UN CAPTEUR

(30) Priorität: 27.11.2007 DE 102007057386
(43) Veröffentlichungstag der Anmeldung: 11.08.2010
(73) Patentinhaber: Endress + Hauser Conducta GmbH+Co. KG, 70839 Gerlingen (DE)
(72) Erfinder: FANSELOW, Christian, 09326 Geringswalde (DE); SCHOLZ, Robert, 04720 Lüttewitz/Döbeln (DE); PECHSTEIN, Torsten, 01445 Radebeul (DE)
(74) Vertreter: Andres, Angelika Maria
(86) Internationale Anmeldenummer: PCT/EP2008/066342
(87) Internationale Veröffentlichungsnummer: WO 2009/068611

(56) Entgegenhaltungen:
- EP-A- 0 759 547
- WO-A-2005/012865
- WO-A-2006/127917
- GB-A- 1 514 208
- US-A- 4 018 660
- US-B1- 6 380 750

## Beschreibung

Die vorliegende Erfindung betrifft einen Sensor gemäß Anspruch 1 und 12 , welcher mindestens eine Baugruppe enthält, und ein Verfahren gemäß Anspruch 13 zur Herstellung des Sensors gemäß Anspruch 1.

Eine gattungsgemäße Baugruppe umfasst einen beispielsweise metallischen Funktionskörper, welcher zumindest Abschnittsweise von einem Kunststoffschutzkörper umgeben ist, insbesondere mit Kunststoff umspritzt ist. Metallteile und andere Komponenten aus anorganischen Materialien werden meist nach Vorbehandlung mit einem Primer durch spritzgusstechnische Verfahren mit Kunststoff ummantelt. Der Primer soll dabei für eine gute Haftung des Kunststoffes auf der Metalloberfläche sorgen und eine dichte Verbindung gewährleisten. Wenngleich diese Vorgehensweise grundsätzlich zielführend ist, so setzt sie doch dem Anwendungsbereich von Baugruppen, die einen metallischen Funktionskörper aufweisen, der von einem Kunststoffschutzkörper umgeben ist, enge Grenzen, denn durch die unterschiedlichen Wärmeausdehnungskoeffizienten von Metall und Kunststoff ist eine Dichtheit an der Grenzfläche zwischen den beiden Materialien nur in einem begrenzten Temperaturbereich gegeben. Bei zu hohen Temperaturen kann nämlich ein Spalt zwischen dem metallischen Funktionskörper und den ihn umgebenden Kunststoffschutzkörper auftreten, in dem dann Flüssigkeiten und aggressive Medien eindringen können. Dies kann im Ergebnis zur Beschädigung bzw. Zerstörung der Baugruppe bzw. einer Vorrichtung führen, welche die Baugruppe enthält. Gleichermaßen sind derartige Spalte ideale Ansatzpunkte für Bakterienwachstum, weshalb die Baugruppen nach dem Stand der Technik nur eingeschränkt für hygienische Anwendungen geeignet sind.

Dokumente WO 2006/127917 und US 4,018,660 beschreiben Sensoren mit Dichtringen, die von einem Kunststoff überzogen sind.

Es ist daher die Aufgabe der vorliegenden Erfindung, einen Sensor und ein Verfahren bereitzustellen, welche die beschriebenen Nachteile des Standes der Technik überwinden.

Die Aufgabe wird erfindungsgemäß gelöst durch den Sensor gemäß dem unabhängigen Patentanspruch 1 und 12.

Weiterhin offenbart die Erfindung zur Lösung der Aufgabe ein Verfahren zum Umspritzen von metallischen Funktionskörpern mit Kunststoff gemäß dem unabhängigen Patentanspruch 13.

Der erfindungsgemäße Sensor umfasst unter anderem einen Funktionskörper, der einen ersten Werkstoff aufweist, wobei die Oberfläche des Funktionskörpers zumindest abschnittsweise mit einem Kunststoffschutzkörper bedeckt ist, wobei zumindest ein freier Abschnitt der Oberfläche des Funktionskörpers nicht mit einem Kunststoffschutzkörper bedeckt ist, und wobei der freie Abschnitt durch mindestens eine umlaufende, in sich geschlossene Grenzlinie, an welcher der Kunststoffschutzkörper an dem Funktionskörper anliegt, begrenzt ist, dadurch gekennzeichnet, dass in dem Kunststoffschutzkörper, beabstandet zu der Grenzlinie ein elastischer Dichtring dichtend an der Oberfläche des Funktionskörpers anliegt, um den Funktionskörper gegen einen ggf. von der Grenzlinie her zwischen dem Kunststoffschutzkörper und dem Funktionskörper auftretenden Spalt abzudichten.

Der Funktionskörper kann beispielsweise mit dem Kunststoffschutzkörper umgeben sein, wobei in einer Ausgestaltung der Erfindung der freie Abschnitt aus dem Kunststoffschutzkörper herausragt, wobei der elastische Dichtring um dem Funktionskörper verläuft, um dem Funktionskörper gegen einen gegebenenfalls von der Grenzlinie her zwischen dem Kunststoffschutzkörper und dem Funktionskörper auftretenden Spalt abzudichten.

Der Funktionskörper kann in einer Ausgestaltung der Erfindung eine umlaufende Anschlagfläche aufweisen, um dem Dichtring gegen eine Verschiebung senkrecht zu einer durch den Dichtring definierten Ebene abzustützen. Dies ist insbesondere dann vorteilhaft, wenn das Aufbringen des Kunststoffs auf den metallischen Funktionskörper zu einer Verschiebung des Dichtrings führen könnte, beispielsweise durch den anstehenden Spritzdruck.

Der Funktionskörper kann in einer anderen Ausgestaltung der Erfindung einen im wesentlichen ebenen Oberflächenabschnitt aufweisen, welcher den freien Abschnitt der Oberfläche enthält, wobei der Dichtring dichtend auf dem im wesentlichen Ebenenoberflächenabschnitt aufliegt.

Erfingdungsgemäß weist der Kunststoffschutzkörper neben gespritzten Kunststoff ein Formteil auf, welches den Dichtring zumindest teilweise umgibt.

Das Formteil kann insbesondere dazu dienen, den elastischen Dichtring beim Aufbringen bzw. Spritzen des Kunststoffs zum Bilden des Kunststoffschutzkörpers von dem heißen Kunststoff abzuschirmen.

Das Formteil umfasst eine Hülse, welche den elastischen Dichtring ringförmig und ggf. auf einer Stirnseite des Dichtrings umgibt, wobei die Hülse so gestaltet ist, dass sie den Dichtring gegen den Funktionskörper umlaufend vorspannt.

Die Hülse kann beispielsweise einen Abschnitt aufweisen welcher auf der der Anschlagsfläche abgewandeten Seite des Dichtrings an den Funktionskörper ringförmig anliegt.

Das Formteil kann in einer nicht erfindungsgemäßen Ausgestaltung ringförmig ausgebildet sein und eine im wesentlichen koaxiale Nut zur Aufnahme des Dichtrings aufweisen, wobei sich die Nut von einer Stirnseite des Formteils in das Formteil erstreckt. Das Formteil kann in einer Weiterbildung dieser Ausgestaltung der Erfindung den Dichtring gegen den Ebenenoberflächenabschnitt des Funktionskörpers vorspannen.

In einer Weiterbildung der Erfindung kann das Formteil mit dem gespritzten Kunststoff innig verbunden sein. Beispielsweise kann das Formteils als Material den gleichen Kunststoff aufweist, mit dem die Oberfläche des Funktionskörper bedeckt ist.

Unter einer innigen Verbindung ist eine solche Verbindung zu verstehen, bei denen die Materialien des Formteils und des umgebenden Kunststoffs an ihrer gemeinsamen Grenzfläche fest aneinander haften. Dies kann beispielsweise durch Anschmelzen der Oberfläche des Hülsenmaterials beim Aufbringen des geschmolzenen Kunststoffs oder von dessen Komponenten oder durch eine chemische Reaktion zwischen dem Material des Formteils und dem Kunststoff erfolgen.

Der Funktionskörper kann insbesondere ein Metall oder ein Halbleitermaterial aufweisen. Ein metallischer Funktionskörper kann beispielsweise als Elektrode eines Sensors, beispielsweise eines elektrochemischen Sensors, insbesondere eines Leitfähigkeitssensors, dienen. Als Elektrode kann der metallische Funktionskörper beispielsweise zumindest abschnittsweise eine zylindrische Form aufweisen.

Die zumindest abschnittsweise mit dem Kunststoffschutzkörper bedeckte Oberfläche des Funktionskörpers kann in einer Weiterbildung der Erfindung mit dem Kunststoff umspritzt sein, insbesondere mit einem Thermoplasten. Beispielsweise Polyethersulfon (PES), Polyetheretherketon (PEEK) oder andere Hochleistungskunststoffe sind geeignet.

Der erfindungsgemäße Sensor umfasst mindestens eine erfindungsgemäße Baugruppe, wobei der freie Abschnitt der Oberfläche des Funktionskörper als ein mit einem Messmedium zu beaufschlagender Abschnitt des Sensors dient, beispielsweise als Elektrodenabschnitt eines Leitfähigkeitssensors oder als ionensensitiver Abschnitt eines ionensensitiven Feldeffekttransistors (ISFET). Weiterhin kann der Sensor beispielsweise ein Feuchtesensor oder ein Temperatursensor sein.

Ein erfindungsgemäßer Leitfähigkeitssensor kann mindestens zwei voneinander elektrisch isolierte Elektroden umfassen, die mit einem Messmedium beaufschlagbar sind. Beispielsweise kann eine erfindungsgemäße Baugruppe zur Realisierung der ersten Elektrode verwendet werden, und eine zweite Elektrode welche eine zumindest abschnittsweise zylindrische metallische Hülse umfasst, kann die Baugruppe koaxial umgeben, um den Leitfähigkeitssensor zu vervollständigen.

Das erfindungsgemäße Verfahren zum Herstellen des erfindungsgemäßen Sensors durch Umspritzen eines Funktionskörpers mit Kunststoff zum Ausbilden eines Kunststoffschutzkörpers umfasst die folgenden Schritte:
Positionieren eines elastischen Dichtrings an dem Funktionskörper;
Anbringen eines Formteils zum Schützen des elastischen Dichtrings gegen Einwirken des eingespritzten Kunststoffs auf den Dichtring und ggf. zum Vorspannen des Dichtrings gegen den Funktionskörper;
und zumindest abschnittsweise Umspritzen des Funktionskörpers mit Kunststoff, zum Bilden des Kunststoffschutzkörpers, wobei das Formteil mit dem gespritzten Kunststoff eine innige Verbindung eingehen kann.

Die Erfindung wird nun anhand eines in den Zeichnungen dargestellten Ausführungsbeispiels erläutert. Es zeigt:
- Fig. 1:: eine Ansicht von Komponenten eines ersten Ausführungsbeispiels einer erfindungsgemäßen Baugruppe;
- Fig. 2:: einen Längschnitt durch einen erfindungsgemäßen Leitfähigkeitssensor, welcher eine erfindungsgemäße Baugruppe enthält; und
- Fig. 3:: Längsschnitte durch eine erfindungsgemäße Baugruppe eines pH-ISFET-Sensors in einer Folge von Fertigungsschritten A bis D

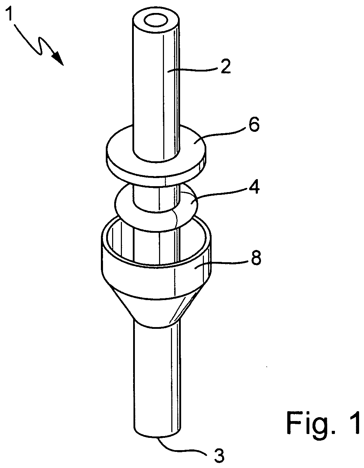

Figur 1 zeigt einen zylindrischen Metallkörper 2, welcher aus Edelstahl gefertigt ist, und welcher bis auf einen axialen Endabschnitt, der an seiner unteren Stirnfläche 3 anschließt, mit einem Thermoplasten umspritzt werden soll, welcher insbesondere mit Polyethersulfon (PES) umfassen kann.

Auf diese Weise soll der metallische Zylinder mit einem elektrischen Isolator umgeben werden. Hierfür ist PES besonders gut geeignet, da es eine gute Chemikalienbeständigkeit aufweist und daher den Einsatz der Baugruppe in elektrochemischen Sensoren ermöglicht. PES weist zudem eine große Formstabilität auf, weshalb kaum elastische Verformungen an Bauteilen aus PES zu erwarten sind. Damit einher geht jedoch ein Nachteil, dass nämlich etwaige Ringspalte zwischen dem zylindrischen Metallkörper (2) und einer (nicht dargestellten) Kunststoffummantelung aufgrund unterschiedlicher Wärmeausdehnungskoeffizienten nicht durch elastische Eigenschaften der Kunststoffummantelung ausgeglichen werden können. Erfindungsgemäß wird daher ein elastischer Dichtring (4) auf den zylindrischen Metallkörper (2) aufgeschoben, damit das elastische Material des Dichtrings (4), beispielsweise Elastomere, insbesondere Perfluorelastomere oder Fluorkautschuk, den zylindrischen Metallkörper (2) gegen den ihn umgebenden Kunststoffschutzkörper auch bei Ringspaltbildung abdichten kann.

Sofern bei der Umspritzung des Metallkörpers (2) mit Kunststoff große Kräfte aufgrund der Zähigkeit des Kunststoffs zu erwarten sind, ist es vorteilhaft, an dem zylindrischen Metallkörper (2) eine Anschlagfläche vorzusehen, an der sich der Dichtring (4) abstützen kann. Eine solche Anschlagfläche kann beispielsweise mittels einer metallischen Ringscheibe (6) realisiert sein, welche beispielsweise im Reibschluss bzw. durch Schweißen oder Löten an dem zylindrischen Metallkörper (2) fixiert ist. Vor dem Umspritzen wird der Dichtring (4) vollständig an die Ringscheibe (6) heran geschoben, um eine weitere Positionsveränderung während des Spritzens zu verhindern.

Sofern eine Beschädigung des elastischen Dichtrings (4) durch das Spritzgut zu erwarten ist, kann der Dichtring (4) weiterhin mit einer Hülse (8) geschützt werden, wobei die Hülse über den Dichtring (4) und gegebenenfalls auch über die Ringscheibe (6) geschoben wird. Wie in Figur 1 nicht näher dargestellt, kann die Hülse eine radiale Stufe aufweisen, um zu gewährleisten, dass der Dichtring (4) mit einem definierten radialen Anpressdruck gegen den zylindrischen Metallkörper (2) gedrückt wird.

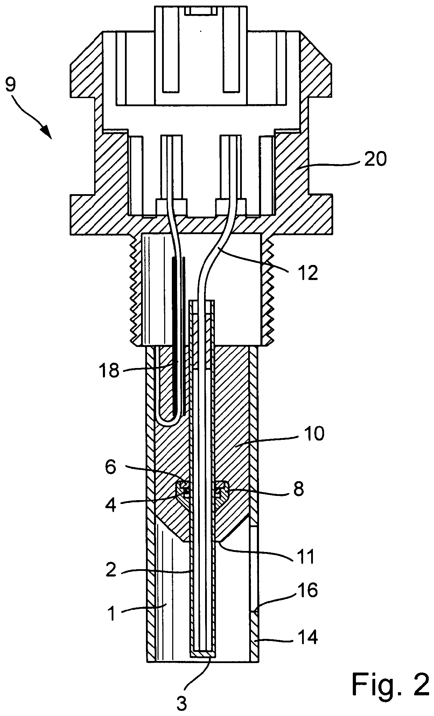

Figur 2 zeigt nun die Baugruppe aus Figur 1 im eingebauten zustand in einem elektrochemischen Sensor, nämlich einem Leitfähigkeitssensor. Die Baugruppe (1) mit dem zylindrischen Metallkörper (2) ist nunmehr von Kunststoff (10) umspritzt, wobei die Dichtungskomponente, bestehend aus dem Dichtring (4) der Ringscheibe (6) und der Hülse (8) im Abstand von etwa einem Radius des den Metallkörpers (2) umgebenden Kunststoffkörpers (10) von der Stirnfläche (11) des Kunststoffkörpers (10) beabstandet ist. Wenn nun aufgrund von Temperaturschwankungen ein Ringspalt zwischen dem Kunststoffkörper (10) und dem zylindrischen Metallkörper (2) entsteht, welcher von der Stirnfläche (11) des Kunststoffkörpers (10) her Kontakt zu einem den elektrochemischen Sensor umgebenden Medium hat, dann wird der Ringspalt durch den elastischen Dichtring (4) unterbrochen, sodass ein weiteres Eindringen des Messmediums in die Baugruppe verhindert ist. Vorzugsweise weist die Hülse (8) den gleichen Werkstoff wie das Material des Kunststoffkörpers (10) auf, insbesondere bei PES wird beim Umspritzen des Metallkörpers die Oberfläche der Hülse (8) angeschmolzen, sodass die Hülse (8) innig mit dem Material des Kunststoffkörpers (10) verbunden ist. Dies ist in soweit vorteilhaft, weil damit um die Hülse herum kein paralleler Kontaminationspfad entstehen kann, welcher die elastische Dichtung (4) umgehen würde. Folgend werden noch kurz die Einzelheiten des erfindungsgemäßen Leitfähigkeitssensors erläutert. Der zylindrische Metallkörper (2) bildet die innere Elektrode eines Leitfähigkeitssensors mit zwei koaxialen Elektroden, wobei die Spannung bzw. der Strom der inneren Elektrode über eine Leitung (12) erfasst wird, welche mit der inneren Elektrode über eine zentrale Bohrung im galvanischen Kontakt steht. Als äußere Elektrode ist eine zylindrische Edelstahlhülse (14) vorgesehen, welche auf den ebenfalls Abschnittsweise zylindrischen Kunststoffkörper (10) aufgebracht ist. Die Hülse (14) weist in ihrem unteren Endabschnitt mindestens einen Durchbruch (16) auf, um die Bildung von Gasblasen nach dem Tauchglockenprinzip um die zentrale Elektrode (2) zu verhindern.

Das Potential bzw. der Stromfluss von der äußeren Elektrode (2) wird über eine Leitung (18) angeführt, welche die Hülse an der Mantelfläche des Kunststoffkörpers (10) kontaktiert. Der Leitfähigkeitssensor umfasst weiterhin ein Gehäuse (10), in welchem eine elektronische Schaltung zum Betreiben des Leitfähigkeitssensors angeordnet ist, auf deren Einzelheiten es hier jedoch nicht ankommt.

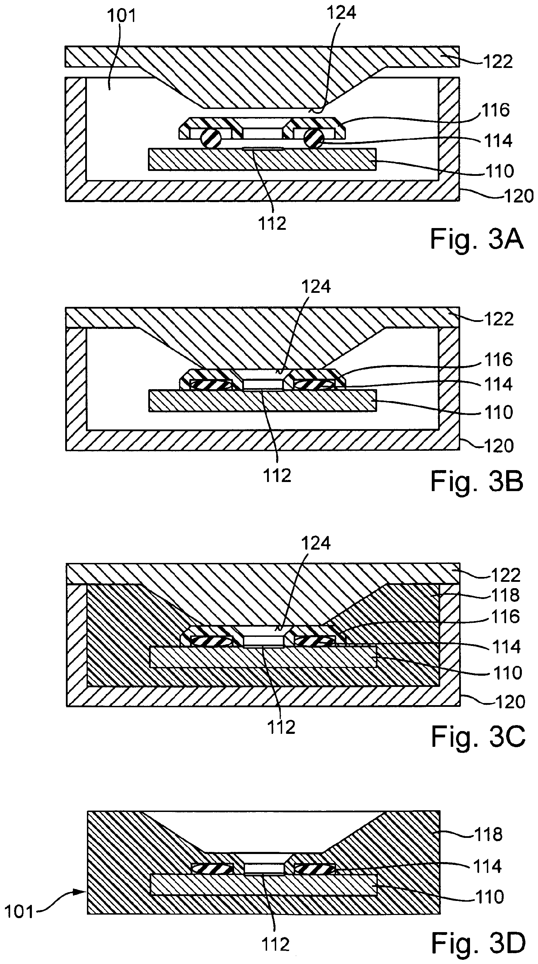

Das in Fig. 3 dargestellte Ausführungsbeispiel betrifft die Baugruppe 101 eines pH-ISFET-Sensors, genauer gesagt, die Fertigungsschritte zur Montage des Sensorträgers 110 mit einem in einem Gehause118, wobei der Sensorträger 110 in diesem Falle dem Funktionskörper entspricht, und das Gehäuse den Kunststoffschutzkörper aufweist. Der Sensorträger 110 umfasst einen Halbleitersensor mit einem ionensensitiven Gateabschnitt 112, welcher im Messbetrieb mit einem Messmedium zu beaufschlagen ist. Daher ist dieser Gateabschnitt beim Umspritzen des Sensorträgers 110 mit einem Kunststoff zur Fertigung des Gehäuses 118 von dem Kunststoff freizuhalten.

Zunächst wird im Fertigungsschritt A der Sensorträger 110 in einer Spritzgussform 120 positioniert, wobei auf dem Sensorträger 110 um den Gateabschnitt 112 ein elastischer Dichtring 114 aufgelegt wird, auf weiterhin ein ringförmiges Kunststoff-Formteil 116 aufgesetzt wird, welches an seiner unteren Stirnseite eine koaxial verlaufende Ringnut aufweist, um den Dichtring aufzunehmen. In Schritt B wird die Spritzgussform 120 mittels eines Deckels 122 verschlossen, wobei der Deckel 122 einen Stempel 124 aufweist, welcher einerseits das Kunststoff-Formteil 116 auf den Sensorträger 110 herunter drückt, so dass der Dichtring 114 in der Ringnut des Kunststoff-Formteils 116 vorgespannt ist, und welcher andererseits das Kunststoff-Formteil 116 auf der dem Sensorträger abgewandten Stirnseite dichtend abschließt, so dass der von dem Kunststoff-Formteil 116 umschlossene Gateabschnitt 112 vor dem in Fertigungsschritt C in die Spritzgussform 120 eingespritzten Kunststoff (beispielsweise Polyethersulfon) geschützt ist.

Nachdem der eingespritzte Kunststoff in der Form ausgehärtet ist, kann die Baugruppe 101 aus der Spritzgussform 120 entnommen werden.

Das Kunststoff-Formteil 116 kann beispielsweise den gleichen Kunststoff aufweisen, der in Schritt C in die Spritzgussform eingespritzt wird. Durch Anschmelzen der Oberflache des Kunststoff-Formteils 116 ohne die strukturelle Stabilität des Kunststoff-Formteils zu gefährden, kann das Kunststoff-Formteil eine innige Verbindung mit dem eingespritzten Gehäusematerial eingehen, und mit diesem zusammen einen Kunststoffschutzkörper 118 bilden. Das Formteil kann insoweit in dem Kunststoffschutzkörper aufgegangen sein. Andererseits ist in Schnittanalysen durchaus noch die Kontur der Grenze zwischen dem eingespritzten Kunststoff und dem Kunststoff-Formteil 116 erkennbar.

## Patentansprüche

1. Sensor (9), welcher mindestens eine Baugruppe (1), umfasst, wobei die Baugruppe (1)
einen Funktionskörper (2) umfasst, der einen ersten Werkstoff aufweist, wobei die Oberfläche des Funktionskörpers (2) zumindest abschnittsweise mit einem Kunststoffschutzkörper (10) bedeckt ist, wobei zumindest ein freier Abschnitt der Oberfläche des Funktionskörper (2) nicht mit dem Kunststoffschutzkörper (10) bedeckt ist,
wobei der freie Abschnitt der Oberfläche des Funktionskörpers (2) als ein mit dem Messmedium zu beaufschlagender Abschnitt des Sensors (9) dient, und wobei der freie Abschnitt durch mindestens eine umlaufende, in sich geschlossene Grenzlinie, an welcher der Kunststoffschutzkörper (10) an dem Funktionskörper (2) anliegt, begrenzt ist,
wobei in dem Kunststoffschutzkörper (10) beabstandet zu der Grenzlinie ein elastischer Dichtring (4) dichtend an der Oberfläche des Funktionskörpers (2) anliegt, um den Funktionskörper (2) gegen einen von der Grenzlinie her zwischen dem Kunststoffschutzkörper (10) und dem Funktionskörper (2) auftretenden Spalt abzudichten,
**dadurch gekennzeichnet, dass** der Kunststoffschutzkörper (10) gespritzten Kunststoff und ein Formteil aufweist, welches den Dichtring zumindest teilweise umgibt oder einschließt, und wobei das Formteil eine Hülse (8) umfasst, welche den elastischen Dichtring (4) ringförmig umgibt, wobei die Hülse (8) den Dichtring (4) gegen den Funktionskörper (2) umlaufend vorspannt.

2. Sensor (9) nach Anspruch 1, wobei der Funktionskörper (2) mit dem Kunststoffschutzkörper umgeben ist, und wobei der freie Abschnitt aus dem Kunststoffschutzkörper herausragt, wobei elastische Dichtring um dem Funktionskörper verläuft, um dem Funktionskörper (2) gegen einen gegebenenfalls von der Grenzlinie her zwischen dem Kunststoffschutzkörper (10) und dem Funktionskörper (2) auftretenden Spalt abzudichten.

3. Sensor (9) nach Anspruch 2, wobei
der Funktionskörper (2) eine umlaufende Anschlagfläche (6) aufweist, um dem Dichtring (4) gegen eine Verschiebung senkrecht zu einer durch den Dichtring definierten Ebene abzustützen.

4. Sensor (9) nach Anspruch 1, wobei der Funktionskörper (2) einen im wesentlichen ebenen Oberflächenabschnitt aufweist, welcher den freien Abschnitt der Oberfläche enthält, wobei der Dichtring (4) dichtend auf dem im wesentlichen ebenen Oberflächenabschnitt aufliegt.

5. Sensor (9) nach Anspruch 3, wobei die Hülse (8) einen Abschnitt aufweist, welcher auf der der Anschlagfläche (6) abgewandeten Seite des Dichtrings (4) an den Funktionskörper (2) ringförmig anliegt.

6. Sensor (9) nach Anspruch 4, wobei das Formteil den Dichtring gegen den ebenen Oberflächenabschnitt des Funktionskörper vorspannt.

7. Sensor (9) nach Anspruch 1 oder einem davon abhängigen Anspruch, wobei das Formteil mit dem gespritzten Kunststoff innig verbunden ist.

8. Sensor (9) nach Anspruch 7, wobei das Formteil den gleichen Kunststoff aufweist, wie der gespritzte Kunststoff.

9. Sensor (9) nach einem der vorhergehenden Ansprüche, wobei der Funktionskörper ein Metall- oder ein Halbleitermaterial aufweist.

10. Sensor (9) nach einem der vorhergehenden Ansprüche, wobei die zumindest abschnittsweise mit dem Kunststoffschutzkörper bedeckte Oberfläche des Funktionskörper mit dem Kunststoff umspritzt ist, wobei der Kunststoff insbesondere ein Thermoplasten, insbesondere Polyethersulfon oder Polyetheretherketon umfasst.

11. Sensor (9) nach einem der Ansprüche 1 bis 10 wobei der freie Abschnitt der Oberfläche des Funktionskörper als Elektrodenabschnitt eines Leitfähigkeitssensors oder als sensitiver Abschnitt eines ionensensitiven Feldeffekttransistors (ISFET) dient.

12. Sensor (9), umfassend
- eine Baugruppe (101), insbesondere eine Baugruppe (101) eines pH-ISFET-Sensors,
- einen Sensorträger (110), wobei der Sensorträger (110) einem Funktionskörper (2) entspricht, und ein Gehäuse eines Kunststoffschutzkörpers (10) aufweist, und wobei der Sensorträger (110) einen Halbleitersensor mit einem ionensensitiven Gateabschnitt (112) umfasst, welcher im Messbetrieb mit einem Messmedium zu beaufschlagen ist, so dass der Gateabschnitt (112) bei einem Umspritzen des Sensorträgers (110) mit einem Kunststoff zur Fertigung des Gehäuses (118) von dem Kunststoff freigehalten ist,
wobei auf dem Sensorträger (110) um den Gateabschnitt (112) ein elastischer Dichtring (114) aufgelegt ist, auf dem ein ringförmiges Kunststoff-Formteil (116) aufgesetzt ist, welches an seiner unteren Stirnseite eine koaxial verlaufende Ringnut zum Aufnehmen des Dichtrings (114) aufweist.

13. Verfahren zum Herstellen des Sensors (9) nach einem der vorhergehenden Ansprüche 1-11 durch Umspritzen des Funktionskörpers (2) mit Kunststoff, zum Ausbilden des Kunststoffschutzkörpers (10), umfassend:
Positionieren des elastischen Dichtrings an dem Funktionskörper; Anbringen des Formteils, umfassend die Hülse (8), zum Schützen des elastischen Dichtrings gegen Einwirken des gespritzten Kunststoffs auf den Dichtring und zum Vorspannen des Dichtrings gegen den Funktionskörper;
und zumindest abschnittsweise Umspritzen des Funktionskörper mit Kunststoff, zum Bilden des Kunststoffschutzkörpers.

## Claims

1. Sensor (9) comprising at least an assembly (1), wherein the assembly (1) comprises a functional body (2), which has a first material, wherein the surface of the functional body (2) is at least partly covered by a plastic protective body (10), wherein at least one free section of the surface of the functional body (2) is not covered by the plastic protective body (10),
wherein the free section of the surface of the functional body (2) serves as a section of the sensor (9) to be exposed to the medium under measurement, and wherein the free section is limited by at least one closed circumferential boundary at which the plastic protective body (10) rests on the functional body (2),
wherein an elastic sealing ring (4) rests in a sealing manner on the surface of the functional body (2) inside the plastic protective body (10) at a distance from the boundary in order to seal the functional body (2) from a gap occurring between the plastic protective body (10) and the functional body (2) coming from the boundary,
**characterized in that**
the plastic protective body (10) features injection-molded plastic and a molded part which surrounds or includes the sealing ring at least partially, and wherein the molded part comprises a sleeve (8) which surrounds the elastic sealing ring (4) in an annular manner, wherein the sleeve (8) pretensions the sealing ring (4) in relation to the functional body (2) around the entire circumference.

2. Sensor (9) as claimed in Claim 2, wherein the functional body (2) is surrounded by the plastic protective body, and wherein the free section projects out of the plastic protective body, wherein the elastic sealing ring is located around the functional body in order to seal the functional body (2) from any gap that may occur between the plastic protective body (10) and the functional body (2) coming from the boundary.

3. Sensor (9) as claimed in Claim 1, wherein the functional body (2) has a circumferential stop face (6) to support the sealing ring (4) against a shift perpendicular to a plane defined by the sealing ring.

4. Sensor (9) as claimed in Claim 1, wherein the functional body (2) has an essentially planar surface section which contains the free section of the surface, wherein the sealing ring (4) rests in a sealing manner on the essentially planar surface.

5. Sensor (9) as claimed in Claim 3, wherein the sleeve (8) has a section which rests in an annular manner on the functional body (2) on the side of the sealing ring (4) facing away from the stop surface (6).

6. Sensor (9) as claimed in Claim 4, wherein the molded part pretensions the sealing ring in relation to the planar surface section of the functional body.

7. Sensor (9) as claimed in Claim 1 or a dependent claim, wherein the molded part is connected on the interior to the injection-molded plastic.

8. Sensor (9) as claimed in Claim 7, wherein the molded part has the same plastic as the injection-molded plastic.

9. Sensor (9) as claimed in one of the previous claims, wherein the functional body features a metallic or semi-conductor material.

10. Sensor (9) as claimed in one of the previous claims, wherein the surface of the functional body which is at least partly covered by the plastic protective body is overmolded with the plastic, wherein the plastic comprises, in particular, a thermoplastic material, notably polyethersulfone or polyether ether ketone.

11. Sensor (9) as claimed in one of the Claims 1 to 10, wherein the free section of the surface of the functional body serves as an electrode section of a conductivity sensor or as a sensitive section of an ion-sensitive field effect transistor (ISFET).

12. Sensor (9) comprising
- an assembly (101), particularly an assembly (101) of a pH-ISFET sensor,
- a sensor support (110), wherein the sensor support (110) corresponds to a functional body (2), and features a housing of a plastic protective body (10), and
wherein the sensor support (110) comprises a semi-conductor sensor with an ion-sensitive gate section (112) which is to be exposed, during operation, to a medium under measurement such that the gate section (112) is not covered by the plastic material when the sensor support (110) is overmolded with a plastic for the production of the housing (118), wherein an elastic sealing ring (114) is placed on the sensor support (110) around the gate section (112), on said sealing ring an annular plastic molded part (116) is fitted, said molded part having a coaxial annular groove on its lower front face for the purpose of accommodating the sealing ring (114).

13. Procedure designed to manufacture the sensor (9) as claimed in one of the previous Claims 1-11 by overmolding the functional body (2) with plastic, for the formation of the plastic protective body (10), comprising:
Positioning of the elastic sealing ring on the functional body; fitting of the molded part, comprising the sleeve (8), to protect the elastic sealing ring from the injection-molded plastic from acting on the sealing ring and to pretension the sealing ring in relation to the functional body; and at least partial overmolding of the functional body with plastic for the formation of the plastic protective body.

## Revendications

1. Capteur (9) comprenant au moins un sous-groupe (1), le sous-groupe (1) comportant un corps fonctionnel (2), qui présente un premier matériau, la surface du corps fonctionnel (2) étant recouverte au moins partiellement par un corps de protection en matière plastique (10), une partie libre de la surface du corps fonctionnel (2) n'étant pas recouverte par le corps de protection en matière plastique (10),
pour lequel la partie libre de la surface du corps fonctionnel (2) sert de partie du capteur (9) pouvant être alimentée avec le produit de mesure, et pour lequel la partie libre est limitée par au moins une limite périphérique fermée en soi, au niveau de laquelle le corps de protection en matière plastique (10) repose contre le corps fonctionnel (2),
pour lequel repose dans le corps de protection en matière plastique (10), à distance de la limite, une bague d'étanchéité (4) élastique de façon étanche sur la surface du corps fonctionnel (2), afin d'assurer l'étanchéité du corps fonctionnel (2) par rapport à une fente apparaissant le cas échéant à partir de la limite entre le corps de protection en matière plastique (10) et le corps fonctionnel (2), **caractérisé**
**en ce que** le corps de protection en matière plastique (10) présente une matière plastique injectée et une pièce formée, laquelle entoure au moins partiellement la bague d'étanchéité, et la pièce formée présentant une douille (8) qui entoure de façon annulaire la bague d'étanchéité (4) élastique, la douille (8) précontraignant sur tout le pourtour la bague d'étanchéité (4) par rapport au corps fonctionnel (2).

2. Capteur (9) selon la revendication 1, pour lequel le corps fonctionnel (2) est entouré par le corps de protection en matière plastique, et pour lequel la partie libre déborde du corps de protection en matière plastique, la bague d'étanchéité élastique étant disposée autour du corps fonctionnel, afin d'assurer l'étanchéité du corps fonctionnel (2) par rapport à une fente apparaissant le cas échéant à partir de la limite entre le corps de protection en matière plastique (10) et le corps fonctionnel (2).

3. Capteur (9) selon la revendication 2, pour lequel le corps fonctionnel (2) présente une surface de butée (6) périphérique, afin de supporter la bague d'étanchéité (4) contre un décalage perpendiculaire à un plan défini par la bague d'étanchéité.

4. Capteur (9) selon la revendication 1, pour lequel le corps fonctionnel (2) présente une partie de surface pour l'essentiel plane, laquelle contient la partie libre de la surface, la bague d'étanchéité (4) reposant de façon étanche sur la partie de surface pour l'essentiel plane.

5. Capteur (9) selon la revendication 3, pour lequel la douille (8) présente une partie qui repose sous forme annulaire sur le corps fonctionnel, sur le côté de la bague d'étanchéité (4) situé à l'opposé à la surface de butée (6).

6. Capteur (9) selon la revendication 4, pour lequel la pièce formée précontraint la bague d'étanchéité contre la partie de surface plane du corps fonctionnel.

7. Capteur (9) selon la revendication 1 ou l'une des revendications en dépendant, pour lequel la pièce formée est reliée à l'intérieur avec la matière plastique injectée.

8. Capteur (9) selon la revendication 7, pour lequel la pièce formée présente la même matière plastique que la matière plastique injectée.

9. Capteur (9) selon l'une des revendications précédentes, pour lequel le corps fonctionnel présente un matériau métallique ou à semi-conducteur.

10. Capteur (9) selon l'une des revendications précédentes, pour lequel la surface du corps fonctionnel recouverte au moins partiellement avec le corps de protection en matière plastique est surmoulée avec la matière plastique, la matière plastique comprenant notamment une matière thermoplastique, notamment du polyéthersulfone ou du polyétheréther-cétone.

11. Capteur (9) selon l'une des revendications 1 à 10, pour lequel une partie libre de la surface du corps fonctionnel sert de partie d'électrode d'un capteur de conductivité ou de partie sensible d'un transistor à effet de champ (ISFET) ionosensible.

12. Capteur (9) comprenant
- un sous-groupe (101), notamment un sous-groupe (101) d'un capteur pH-ISFET,
- un support de capteur (110), le support de capteur (110) correspondant à un corps fonctionnel (2), et comportant un boîtier d'un corps de protection en matière plastique (10), et le support de capteur (110) comprenant un capteur à semi-conducteur avec une section de porte (112) ionosensible, laquelle section peut être alimentée pendant la mesure avec un produit de mesure, de telle sorte que la section de porte (112) n'est pas recouverte par la matière plastique lors du surmoulage du support de capteur (110) avec une matière plastique pour la fabrication du boîtier (118), une bague d'étanchéité élastique (114) étant placée sur le support de capteur (110) autour de la section de porte (112), bague sur laquelle est placée une pièce formée (116) annulaire en matière plastique, laquelle présente sur sa face frontale inférieure une rainure annulaire coaxiale destinée au logement de la bague d'étanchéité (114).

13. Procédé destiné à la fabrication du capteur (9) selon l'une des revendications précédentes 1-11, par le surmoulage du corps fonctionnel (2) avec de la matière plastique, destiné à former le corps de protection en matière plastique (10), comprenant :
Positionnement de la bague d'étanchéité élastique sur le corps fonctionnel ;
montage de la pièce formée, comprenant la douille (8), destinée à la protection de la bague d'étanchéité élastique contre l'influence de la matière plastique injectée sur la bague d'étanchéité et pour la précontrainte de la bague d'étanchéité par rapport au corps fonctionnel ; et au moins surmoulage partiel du corps fonctionnel avec de la matière plastique, pour la formation du corps de protection en matière plastique.
